# NEUE EUROPÄISCHE PATENTSCHRIFT

(11) **EP 0 816 204 B2**
(45) Veröffentlichungstag und Bekanntmachung des Hinweises auf die Entscheidung über den Einspruch: **26.10.2005**
(45) Hinweis auf die Patenterteilung: 21.11.2001
(21) Anmeldenummer: 97810365.3
(22) Anmeldetag: 11.06.1997
(51) Int. Cl.: B62D 1/16

(54) **Lagerungskasten für eine Lenkwelle eines Fahrzeuges und Verfahren zur Herstellung desselben**
Bearing support for a steering shaft of a vehicle and method of manufacturing the same
Support de palier pour un arbre de direction de véhicule et son procédé de fabrication

(30) Priorität: 27.06.1996 CH 161596
(43) Veröffentlichungstag der Anmeldung: 07.01.1998
(73) Patentinhaber: Adval Tech Holding AG, 3172 Niederwangen (CH)
(72) Erfinder: Lüthi, Rudolf, 3172 Niederwangen (CH); Wehrli, Alex, 3204 Spengelried (CH); Jöhr, Hans, 3122 Kehrsatz (CH)
(74) Vertreter: Isler & Pedrazzini AG

(56) Entgegenhaltungen:
- EP-A- 0 502 761
- Unterlagen zur Vorbenutzung 'VW Lenksäule'.

## Beschreibung

Die Erfindung betrifft einen Lagerungskasten gemäss dem Oberbegriff des Anspruchs 1. Weiterhin betrifft die Erfindung ein Verfahren zur Herstellung eines solchen Lagerungskastens.

Ein Lagerungskasten gemäss Oberbegriff des Anspruchs 1, ist bekannt aus EP-A-0 502 761 und wird zum Beispiel in Personenkraftwagen verwendet. Die bekannten Lagerungskasten bestehen aus einem durch Biegen und eventuell Verschweissen aus einer Stahlplatte geformten Rohr, das die Lenkwelle umgibt, und dessen beide Enden als Lageraufnahmestellen für die Lenkwellenlager dienen.

Da es sehr schwierig ist, durch Biegen und Verschweissen aus einer Stahlplatte genau kreiszylinderförmige Rohre herzustellen, können die bei der Verwendung der Rohrenden als Lageraufnahmestellen für die Lenkwellenlager erforderlichen Toleranzen kaum eingehalten werden. Zudem beeinträchtigt eine meist erforderliche Schweissverbindung das Endresultat. Daher müssen die Rohrenden nachbearbeitet werden, was teuer und unerwünscht ist.

Der Erfindung liegt die Aufgabe zugrunde, einen Lagerungskasten mit einer hohen Steifigkeit zu schaffen, der die einfache und genabe Lagerung der Lenkwelle ermöglicht.

Erfindungsgemäss wird dies durch die Merkmale des kennzeichnenden Teils des Patentanspruchs 1 erreicht. Das Vorsehen des Führungsstücks sowie der vorgeformten, fugenlosen Lagerstellen gewährleistet nicht nur gute Lagerungseigenschaften, sondern ergibt auch eine grosse Freiheit in der Gestaltung des Führungsstücks, so dass dieses im Hinblick auf die erforderliche Steifigkeit optimiert werden kann.

Es ist ein weiteres Ziel der Erfindung, ein kostengünstiges und zuverlässiges Verfahren zur Herstellung eines Lagerungskastens zu schaffen. Erfindungsgemäss wird dies durch die Merkmale des kennzeichnenden Teils des Patentanspruchs 9 erreicht. Das Fixieren ohne zusätzliches Fixiermaterial ergibt eine saubere Verbindung.

Weitere vorteilhafte Ausführungsformen gehen aus den abhängigen Ansprüchen hervor.

Nachfolgend wird eine beispielsweise Ausführungsform der Erfindung an Hand der Zeichnung näher erläutert. Es zeigen:
- Figur 1: eine perspektivische Ansicht eines Lagerungskastens gemäss der Erfindung,
- Figur 2: einen schematischen Längsschnitt des Lagerungskastens der Figur 1 mit der Lenkwelle,
- Figur 3: ist eine Seitenansicht, und
- Figur 4: eine Draufsicht auf den Lagerungskasten,
- Figur 5: zeigt einen Teil in Draufsicht, und
- Figur 6: ist eine Seitenansicht eines Teil des Lagerungskastens, und
- Figuren 7 und 8: sind Stirnansichten des Teils nach Figur 5 und 6.

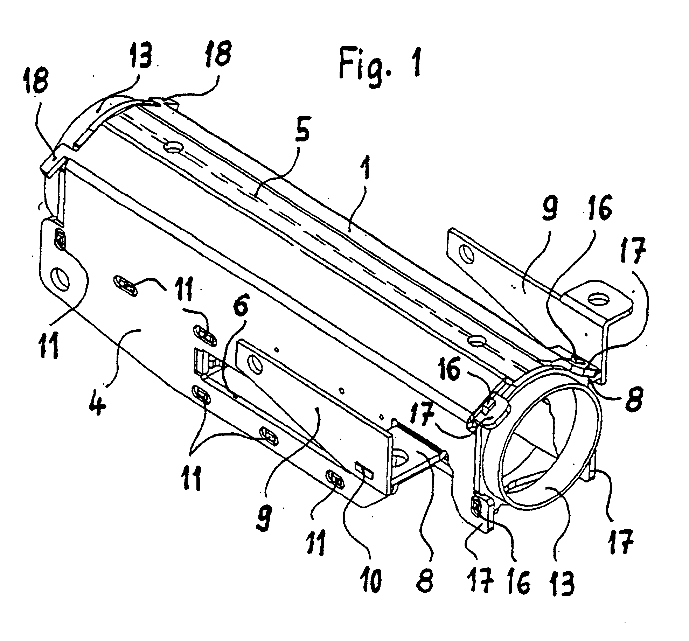

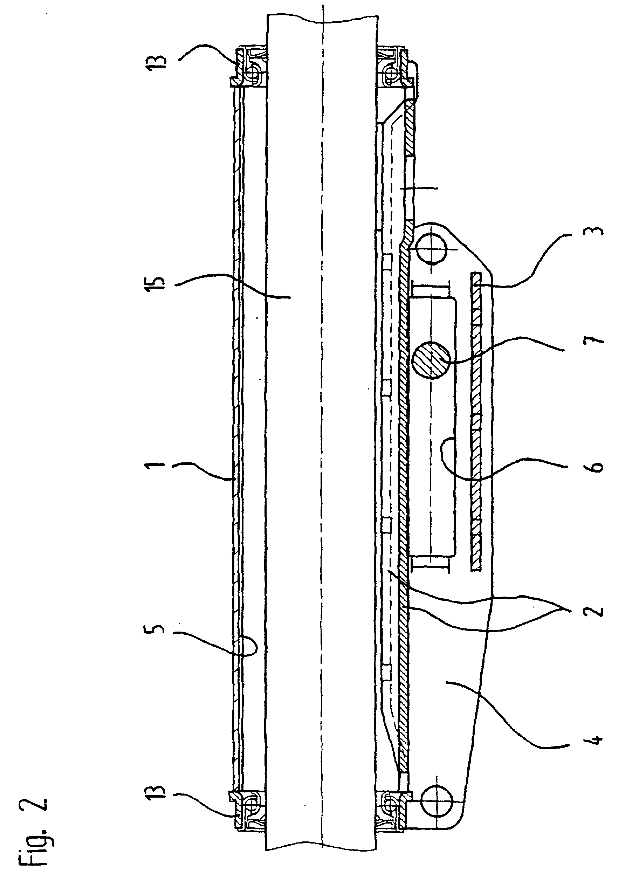

Die Figur 1 zeigt ein Führungsstück, das aus drei miteinander vernieteten Stanz- und Biegeteilen 1, 2 und 3 besteht. Die Teile 2 und 3 werden im folgenden anhand der weiteren Figuren näher erläutert. Der Stanz- und Biegeteil 1 ist im Querschnitt U-förmig gestaltet mit einem gewölbten Oberteil und zwei ebenen Seitenschenkeln 4. Am Scheitel ist der Teil 1 mit einer sich über die ganze Länge erstreckenden Schwächungsritze oder Kerbe 5 versehen. Es entsteht unter dieser Schwächungsritze 5 eine geschwächte Biegestelle, wodurch Restspannungen im U-förmig gebogenen Teil 1 auf ein Mass herabgesetzt werden, welches einer genügend präzisen Formgebung bei der Herstellung nicht mehr entgegensteht. Die beiden Schenkel 4 des Teils 1 weisen je ein Langloch oder Fenster 6 auf. Diese Fenster dienen der längsverschiebbaren Fixierung des Lagerkastens auf einem Querträger 7 des Fahrzeuges (siehe Figur 2). Der Teil 1 ist mit seitlichen Fortsätzen 8 versehen, welche der Montage von Trägern 9 beispielsweise für Kabel, Leitungen und dergleichen dienen. Die Halter 9 sind mit den Fortsätzen 8 durch Vernietung an den Stellen 10 verbunden.

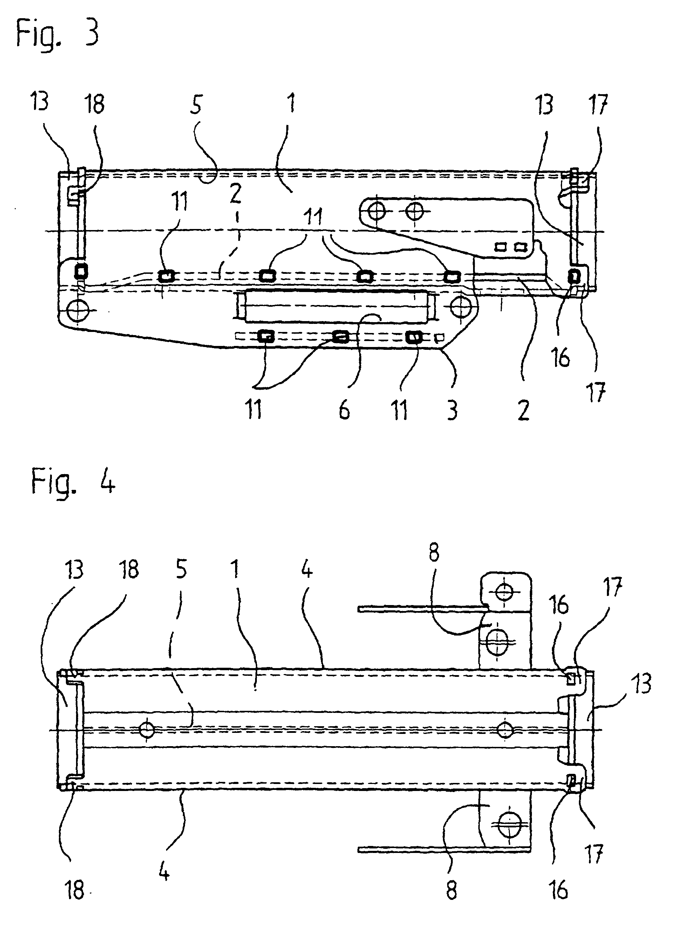

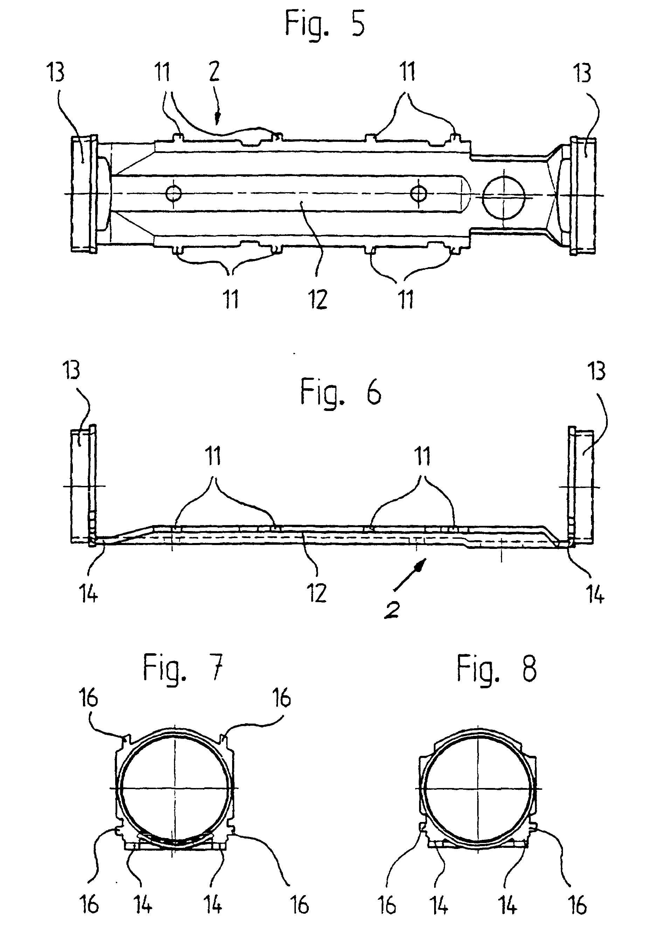

Die Teile 2 und 3 sind ausschliesslich durch Vernietung mit dem Teil 1 verbunden. Die Nietstellen 11 sind in den Figuren 1 und 3 ersichtlich. Die Teile 2 und 3 sind dabei mit seitlichen Lappen 11 versehen, welche in Löcher der Schenkel 4 des Teils 1 eingreifen und darin verstemmt sind. Der Teil 3 ist als ebene Platte ausgebildet, welche den Teil 1 am unteren offenen Ende versteift und teilweise abschliesst. Der Teil 2, der in den Figuren 5 bis 8 einzeln dargestellt ist, besteht aus einem schwach gewölbten Mittelteil 12, der seitlich mit den Lappen 11 zur Vernietung mit dem Teil 1 versehen ist. Der Teil 2 ist einteilig mit zwei an seinen Enden befindlichen Lagerstellen oder Lageraufnahmen 13 verbunden. Diese Lageraufnahmen sind fugenlos im Abstreckverfahren, also durch spanlose Verformung mit hoher Präzision hergestellt.

Die separat geformten Lagerstellen 13 übernehmen die Lagerungsfunktion des Lagerungskastens, während das Führungsstück 1, 2, 3 die erforderliche Steifigkeit gewährleistet.

Die ringförmigen Lagerstellen oder Lageraufnahmen 13 sind durch gebogene Stege 14 mit dem Mittelteil 12 des Teils 2 verbunden. Wie Figur 2 zeigt, sind Kugellager mit Presssitz in die Ringe 13 eingesetzt, welche der Lagerung der nur in Figur 2 dargestellten Lenkwelle 15 dienen. Wie insbesondere die Figuren 1, 7 und 8 zeigen, sind die Lageraufnahmen 13 im Bereiche ihrer Flansche mit Nietlappen 16 versehen, welche gemäss Figur 1 mit Fortsätzen 17 des Teils 1 vernietet sind. Die in Figur 1 hinten liegende Verbindung zwischen den Teilen 1 und 2 ist etwas anders gestaltet, indem die Verbindung unten mittels Nietlappen 16 gemäss Figur 8, oben jedoch mittels Haken 18 des Teils 1, welcher hinter Flansche der Aufnahme 13 greifen, erfolgt. Die Teile 1 und 2 sind somit sowohl im Mittelbereich als auch an den Stirnseiten ausschliesslich mittels durch spanlose Verformung hergestellter und dann verformter Teile verbunden.

Es sind somit keine zusätzlichen Verbindungsmittel und insbesondere keine Schweissvorgänge erforderlich, welche einen teuren und aufwendigen Materialauftrag erfordern. Es wäre höchstens denkbar, dass anstelle der Nietstellen z. T. Punktschweissstellen erstellt werden, oder dass die Nietstellen zusätzlich durch Punktschweissung verstärkt werden.

Aus dem Obenstehenden ergibt sich schon weitgehend, dass die Herstellung des erfindungsgemässen Lagerkastens besonders rationell und zugleich mit hoher Präzision durch reine spanlose Formgebung und Verformung erstellt werden kann. Alle Teile werden vorerst in flachem Zustand ausgestanzt. Der Teil 1 wird sodann in seine U-Form gebogen, wobei allerdings seine Schenkel 4 noch soweit gespreizt bleiben, dass die Teile 2 und 3 eingesetzt werden können. Die Lagerringe 13 des Teils 2 werden durch Biegen der Stege 14 in die dargestellte Lage gebogen und genau gerichtet. In einer speziellen Fertigungsvorrichtung werden die Teile 1, 2 und 3 separat eingeführt, wobei die oberen Nietlappen 16 des Teils 2 in die Oeffnungen der Lappen 17 eingeführt werden. Sodann werden die Schenkel 4 des Teils 1 in ihre planparallele Lage gepresst, wobei die Nietlappen der Teile 2 und 3 in die zugeordneten Oeffnungen des Teils 1 eindringen, worauf die erwähnte Vernietung erfolgt. Auch die Haken 18 werden satt gegen die Flanschteile des einen Ringes 13 angeformt.

Damit lässt sich die Herstellung besonders einfach automatisieren, indem ausschliesslich Verformungsoperationen auszuführen sind ohne jede Verschweissung, Verschraubung oder dergleichen. Auch die Vernietung erfolgt ausschliesslich mit an den Teilen 1 bis 3 angeformten Elementen, also ohne besondere Nieten. Somit ist kein zusätzliches Fixiermaterial erforderlich.

Die Herstellung des Teils 2 einteilig mit den Lagerstellen oder Lageraufnahmen 13 ist besonders einfach, und sie hat den Vorteil, dass die beiden Ringe 13 zur Aufnahme der Lager einteilig miteinander verbunden sind, womit nicht nur eine hohe Präzision des Innendurchmessers der Ringe 13 zur Aufnahme der Kugellager, sondern auch deren Ausrichtung besonders genau gewährleistet ist. Zudem kann der Teil 2, bevor er gebogen wird, einfach gestapelt werden, was seine Zwischenlagerung erleichtert.

Es wäre jedoch auch denkbar, diese Lageraufnahmen 13 als besondere Teile herzustellen und mit den übrigen Teilen zu vernieten. Die beiden als Versteifung wirkenden Teile 2 und 3 würden jedoch auch in diesem Falle eingesetzt zur genügenden Versteifung des Lagerkastens in Querrichtung, indem nämlich dieser Lagerkasten in eingebautem Zustand bedeutenden Querkräften ausgesetzt ist. Auch ist es möglich, die Lageraufnahmestellen 13 einteilig mit dem Teil 1 herzustellen. Wenn in den Ansprüchen die ringförmigen Lageraufnahmen oder Lagersitze 13 allgemein als Lagerstellen bezeichnet werden, ist dies so zu verstehen, dass es sich hier um die Stellen des Lagerungskastens handelt, welche der Lagerung der Lenkwelle 15 dienen. Grundsätzlich könnten nämlich die Ringe 13 auch direkt als Lagerschalen je eines Gleitlagers für die Lenkwelle 15 dienen.

## Patentansprüche

1. Lagerungskasten für eine Lenkwelle eines Fahrzeugs, mit einem am Fahrzeug befestigbaren und spanlos geformten Führungsstück (1,2,3) zum Umgeben der Lenkwelle (15), **dadurch gekennzeichnet, dass** zusätzlich **durch reine spanlose Formgebung und Verformung** geformte, fugenlose **Lageraufnahmen** (13) für die Lenkwelle (15) an den Enden des Führungsstücks vorgesehen sind.

2. Lagerungskasten nach Anspruch 1, **dadurch gekennzeichnet, dass** die **Lageraufnahmen** (13) jeweils mit Hilfe von mittels Nietlappen (11, 16) erstellten Nietverbindungen (16, 18) am Führungsstück (1,2,3) befestigt sind.

3. Lagerungskasten nach Anspruch 1 oder 2, **dadurch gekennzeichnet, dass** das Führungsstück (1,2,3) einen im Querschnitt senkrecht zur Längsrichtung der Lenkwelle (15) im wesentlichen U-förmigen ersten Teil (1) zum Umgeben der Lenkwelle (15) umfasst, welcher mittels eines zweiten, im wesentlichen flachen Teils (2) abgeschlossen ist.

4. Lagerungskasten nach Anspruch 3, **dadurch gekennzeichnet, dass** am ersten Teil (1) und parallel zum zweiten Teil (2) ein dritter, im wesentlichen flacher Teil (3) zur Stabilisierung vorgesehen ist.

5. Lagerungskasten nach Anspruch 4, **dadurch gekennzeichnet, dass** der zweite (2) und der dritte (3) Teil mittels Nietverbindungen (11) am ersten Teil (1) befestigt sind.

6. Lagerungskasten nach einem der Ansprüche 3 bis 5, **dadurch gekennzeichnet, dass** die **Lageraufnahmen** (13) für die Lenkwelle (15) mittels gebogener Stege (14) mit dem zweiten Teil (2) verbunden sind.

7. Lagerungskasten nach einem der Ansprüche 1 bis 6, **dadurch gekennzeichnet, dass** das Führungsstück (1,2,3) mit seitlichen Befestigungslaschen (8) versehen ist.

8. Lagerungskasten nach einem der Ansprüche 3 bis 7, **dadurch gekennzeichnet, dass** der erste Teil (1) zur Kompensation der Rückfederung seiner Seitenschenkel (4) in Längsrichtung der Lenkwelle (15) durch eine zentrale Kerbe (5) geschwächt ist.

9. Verfahren zur Herstellung eines Lagerungskastens für eine Lenkwelle eines Fahrzeugs **nach einem der vorhergehenden Ansprüche**, wobei durch Stanzen, Biegen und Fixieren aus im wesentlichen flachem Grundmaterial ein am Fahrzeug befestigbares Führungsstück (1, 2, 3) zum Umgeben der Lenkwelle (15) geformt wird, **dadurch gekennzeichnet, dass** ausserdem zwei fugenlose **Lageraufnahmen** (13) für die Lenkwelle (15) **durch reine spanlose Formgebung und Verformung** geformt werden, **wobei das Fixieren ohne zusätzliches Fixiermaterial geschieht.**

10. Verfahren nach Anspruch 9, **dadurch gekennzeichnet, dass** das Fixieren durch mittels Nietlappen (11,16) erstellte Nietverbindungen geschieht.

11. Verfahren nach Anspruch 9, **dadurch gekennzeichnet, dass** zum Fixieren **z.T.** Punktschweissstellen erstellt werden.

12. Verfahren nach einem der Ansprüche 9 bis 11, **dadurch gekennzeichnet, dass** durch Stanzen und Biegen aus einem ersten Stück Grundmaterial ein im Querschnitt senkrecht zur Längsrichtung der Lenkwelle (15) im wesentlichen U-förmiger erster Teil (1) zum Umgeben der Lenkwelle (15) gebildet wird.

13. Verfahren nach einem der Ansprüche 9 bis 12, **dadurch gekennzeichnet, dass** durch Stanzen aus einem zweiten Stück Grundmaterial ein zweiter, im wesentlichen flacher Teil (2) gebildet wird.

14. Verfahren nach Anspruch 13, **dadurch gekennzeichnet, dass** in einem Abstreckverfahren an den Enden des zweiten Teils (2) zusätzlich je eine im wesentlichen in der Ebene desselben liegende, ringförmige, fugenlose **Lageraufnahme** (13) für die Lenkwelle 15 gebildet wird.

15. Verfahren nach Anspruch 14, **dadurch gekennzeichnet, dass** beim Montieren des Lagerungskastens die **Lageraufnahmen** (13) aus der Ebene des zweiten Teils (2) heraus in eine Position senkrecht zu dieser Ebene gebogen werden, wonach durch weiteres Biegen des ersten Teils (1) und Nieten aus dem ersten (1) und dem zweiten Teil (2) das Führungsstück (1,2,3) zum Umgeben der Lenkwelle (15) gebildet wird.

16. Verfahren nach Anspruch 15, **dadurch gekennzeichnet, dass** bei der Bildung des Führungsstücks (1,2,3) zusätzlich am ersten Teil (1) und parallel zum zweiten Teil (2) ein dritter, im wesentlichen flacher Teil (3) zur Stabilisierung befestigt wird.

## Claims

1. Bearing box for the steering shaft of a vehicle, comprising a guiding piece (1,2,3) for surrounding the steering shaft (15), the guiding piece being formed non-chipping and adapted to be fastened to the vehicle, **characterised in that** seamless bearing receiving elements (13) for the steering shaft (15) which are formed by pure non-chipping forming and deformation are additionally provided at the end of the guiding piece.

2. Bearing box according to claim 1, **characterised in that** each of the bearing receiving elements (13)is fastened to the guiding piece (1,2,3) through riveted connections (16,18) produced by means of rivet tabs (11,16).

3. Bearing box according to claim 1 or 2, **characterised in that** the guiding piece (1,2,3) comprises a first part (1) for surrounding the steering shaft (15), this first part having an essentially U-shaped cross-section perpendicular to the lengthwise direction of the steering shaft (15) and being closed by means of a second, essentially flat part (2).

4. Bearing box according to claim 3, **characterised in that** a third, essentially flat part (3) is provided for stabilisation purposes on the first part (1) and in parallel to the second part (2).

5. Bearing box according to claim 4, **characterised in that** the second part (2) and the third part (3) are fastened to the first part (1) by means of riveted connections.

6. Bearing box according to any one of claims 3 to 5, **characterised in that** the bearing receiving elements (13) for the steering shaft (15) are connected to the second part (2) by means of curved lands (14).

7. Bearing box according to any one of claims 1 to 6, **characterised in that** the guiding piece (1,2,3) is provided with lateral fastening tabs (8).

8. Bearing box according to any one of claims 3 to 7, **characterised in that** the first part (1) is weakened by a central notch (5) in the lengthwise direction of the steering shaft (15) in order to compensate for the backresilience of its lateral legs (4).

9. Process for the manufacture of a bearing box for the steering shaft of a vehicle, according to any of the preceeding claims, in which a guiding piece (1,2,3) for surrounding the steering shaft (15) and capable of being fastened to the vehicle is formed from an essentially flat base material by punching, bending and fastening, **characterised in that** two seamless bearing receiving elements (13) for the steering shaft (15) are additionally formed by pure non-chipping forming and deformation, wherein the fastening is effected without additional fastening material.

10. Process according to claim 9, **characterised in that** the fastening is achieved through riveted connections produced by means of rivet tabs (11,16).

11. Process according to claim 10, **characterised in that** the fastening is achieved by stop-welding.

12. Process according to any one of claims 9 to 11, **characterised in that** a first part (1) for surrounding the steering shaft (15) is shaped from a first piece of base material by punching and bending, the first part having an essentially U-shaped cross-section perpendicular to the lengthwise direction of the steering shaft (15)

13. Process according to any one of claims 9 to 12, **characterised in that** a second, essentially flat part (2) is shaped from a second piece of base material by punching.

14. Process according to claim 13, **characterised in that** a ring-shaped, seamless bearing receiving element (13) for the steering shaft (15) is additionally shaped at each end of the second part (2) by an ironing technique and extends in the plane of the second part essentially.

15. Process according to claim 14, **characterised in that** during the assembly of the bearing box, the bearing receiving elements (13) are bent out of the plane of the second part (2) to a position perpendicular to that plane, the guiding piece (1,2,3) for surrounding the steering shaft (15) being subsequently formed of the first (1) and second (2) parts by further bending of the first part (1) and riveting.

16. Process according to claim 15, **characterised in that** a third, substantially flat part (3) is additionally fastened for stabilisation purposes to the first part (1) and in parallel to the second part (2) during the production of the guiding piece (1,2,3).

## Revendications

1. Boîte de logement pour l'arbre de direction d'un véhicule, comprenant une pièce de guidage, (1,2,3) formée, capable d'être fixée au véhicule et destinée à loger l'arbre de direction (15), **caractérisée en ce que** les extrémités de ladite pièce de guidage sont en outre munies de logements d'appui (13), formés par pure formage et déformation et sans joints pour l'arbre de direction(15).

2. Boîte de logement selon la revendication 1, **caractérisée en ce que** les logements d'appui (13) sont chaque fois fixés à la pièce de guidage (1,2,3) par des connexions rivées (16,18) obtenues au moyen de languettes à river (11,16).

3. Boîte de logement selon la revendication 1 ou 2, **caractérisée en ce que** la pièce de guidage (1,2,3) comporte une première partie (1) destinée à loger l'arbre de direction (15), dont la coupe transversale, perpendiculairement à la direction longitudinale de l'arbre de direction (15), est essentiellement en forme de U, et qui est fermée par une deuxième partie (2) essentiellement plate (2).

4. Boîte de logement selon la revendication 3, **caractérisée en ce qu'**une troisième partie (3) essentiellement plate (2) est prévue sur la première partie (1) et parallèlement à ladite deuxième partie (2) aux fins de stabilisation.

5. Boîte de logement selon la revendication 4, **caractérisée en ce que** la deuxième (2) et la troisième (3) partie sont fixées à la première partie (1) au moyen de connexions rivées (11).

6. Boîte de logement selon l'une quelconque des revendications 3 à 5, **caractérisée en ce que** les logements d'appui (13) pour l'arbre de direction (15) sont reliées à la deuxième partie (2) au moyen de lames (14) courbées.

7. Boîte de logement selon l'une quelconque des revendications 1 à 6, **caractérisée en ce que** la pièce de guidage (1,2,3) comporte des pattes de fixation (8) latérales.

8. Boîte de logement selon l'une quelconque des revendications 3 à 7, **caractérisée en ce que** la première partie (1) est affaiblie en direction longitudinale de l'arbre de direction (15) par une entaille centrale (5) afin de compenser le retour élastique de ses montants latéraux (4).

9. Procédé de fabrication d'une boîte de logement pour l'arbre de direction d'un véhicule selon l'une quelconque des revendications précédentes, ou une pièce de guidage (1,2,3) capable d'être fixée au véhicule et destinée à loger l'arbre de direction est formée à partir d'un matériau de base essentiellement plat par découpage, pliage et fixation, **caractérisée en ce que** deux logements d'appui (13) formés par pure formage et déformation et sans joints pour l'arbre de direction (15) sont également produits, et **en ce que** la fixation est effectuée sans matériel de fixation supplémentaire.

10. Procédé selon la revendication 9, **caractérisé en ce que** la fixation est obtenue par des connexions rivées au moyen de languettes à river (11,16).

11. Procédé selon la revendication 9, **caractérisé en ce que** la fixation est obtenue par des points de soudage.

12. Procédé selon l'une quelconque des revendications 9 à 11, **caractérisé en ce qu'**une première partie (1), destinée à loger l'arbre de direction (15), et dont la coupe transversale, perpendiculairement à la direction longitudinale de l'arbre de direction (15), est essentiellement en forme de U, est formée à partir d'une première pièce du matériau de base par découpage et pliage.

13. Procédé selon l'une quelconque des revendications 9 à 12, **caractérisé en ce qu'**une deuxième partie (2) essentiellement plate est formée par découpage à partir d'une deuxième pièce du matériau de base.

14. Procédé selon la revendication 13, **caractérisé en ce qu'**un logement d'appui (13) annulaire et sans joints pour l'arbre de direction est en outre formé à chaque extrémité de la deuxième partie (2), lesdits logements d'appui s'étendant essentiellement dans le plan de ladite deuxième partie.

15. Procédé selon la revendication 14, **caractérisé en ce que** pendant la production de la boîte de logement, les logements d'appui (13) sont pliés hors du plan de la deuxième partie (2) et amenés à une position perpendiculaire audit plan, la pièce de guidage (1,2,3) destinée à loger l'arbre de direction (15) étant ensuite formée à partir de la première (1) et la deuxième partie (2) par un pliage supplémentaire de la première partie (1) et par rivage.

16. Procédé selon la revendication 15, **caractérisé en ce que** pendant la réalisation de la pièce de guidage (1,2,3), une troisième partie (3) essentiellement plate est en outre fixée à la première partie (1) et parallèlement à la deuxième partie (2) aux fins de stabilisation.
